# EUROPÄISCHE PATENTSCHRIFT

(11) **EP 1 232 202 B1**
(45) Veröffentlichungstag und Bekanntmachung des Hinweises auf die Patenterteilung: **17.08.2005**
(21) Anmeldenummer: 01945260.6
(22) Anmeldetag: 06.06.2001
(51) Int. Cl.: C08J 9/00, C08J 9/14, B29C 44/34

(54) **nERFAHREN UND VORRICHTUNG ZUR HERSTELLUNG VON ZUMINDEST TEILWEISE OFFENZELLIGEN SCHAUMFOLIEN AUS STYROLPOLYMERISATEN**
METHOD AND DEVICE FOR PRODUCING AT LEAST PARTIALLY OPEN-CELLED FOAM FILMS FROM STYRENE POLYMERS
PROCEDE ET DISPOSITIF DE FABRICATION DE FEUILLES DE MOUSSE A CELLULES OUVERTES AU MOINS EN PARTIE, A BASE DE POLYMERES STYROL

(30) Priorität: 13.06.2000 DE 10028386
(43) Veröffentlichungstag der Anmeldung: 21.08.2002
(73) Patentinhaber: Reifenhäuser GmbH & Co. Maschinenfabrik, 53839 Troisdorf (DE)
(72) Erfinder: BERGHAUS, Ulrich, 53842 Troisdorf (DE); HOMER, Stephan, 66664 Merzig (DE); JANSEN, Hubert, 53797 Lohmar (DE)
(74) Vertreter: Müller-Gerbes, Margot, Dipl.-Ing.
(86) Internationale Anmeldenummer: PCT/EP2001/006413
(87) Internationale Veröffentlichungsnummer: WO 2002/000774

(56) Entgegenhaltungen:
- WO-A-98/10015
- WO-A-99/47592

## Beschreibung

Die Erfindung bezieht sich auf ein Verfahren zum Herstellen einer zumindest teilweise offenzelligen Schaumfolie auf Basis von Styrolpolymerisaten sowie eine Vorrichtung unter Einsatz eines Doppelschneckenextruders zum Herstellen derselben.

Zumindest teilweise offenzellige Schaumstoffolien werden überall dort eingesetzt, wo beispielsweise Absorptionsfähigkeit, insbesondere für Flüssigkeiten gewünscht ist oder wasserdampf- und luftdurchlässige Folien erwünscht sind. Ein bevorzugtes Anwendungsgebiet für derartige Schaumfolien mit teilweiser Offenzelligkeit aus Styrolpolymerisaten sind Verpackungen und Behältnisse. In vielfältiger Weise werden Schaumfolien auch zu Endprodukten durch anschließendes Thermoverformen, beispielsweise Schalen, verarbeitet.

Ein Verfahren zum Herstellen eines extrudierten offenzelligen Schaumstoffes auf Basis von Styrolpolymerisaten ist aus der WO 96/00258 bekannt, wobei das Polymer in einem Einschneckenextruder aufgeschmolzen wird. Die hergestellten offenzelligen Schaumstoffolien werden insbesondere für den Einsatz als Dämmelemente für Dächer verwendet.

Des weiteren ist ein Verfahren zum Herstellen einer offenzelligen Polystyrolschaumfolie für Verpackungsschalen aus der EP 0 849 309 A1 bekannt, wobei eine Mischung aus Polystyrol enthaltend inkorporierte aliphatische Kohlenwasserstoffe mit 4 bis 6 Kohlenstoffatomen und gegebenenfalls zusätzlich Polystyrol sowie Nukleierungsmittel in einem Doppelschneckenextruder bei Temperaturen von 130 bis 150°C aufgeschmolzen und extrudiert werden, wobei Doppelschneckenextruder mit einem L/D-Verhältnis von 20 eingesetzt werden.

Der Erfindung liegt die Aufgabe zugrunde, ein wirtschaftliches Verfahren zum Herstellen von zumindest teilweise offenzelligen Schaumfolien auf Basis von Styrolpolymerisaten zu schaffen, deren Eigenschaften flexible an unterschiedliche Anforderungen wie Grad der Offenzeiligkeit, Dichte, Dicke und Polymerzusammensetzung anpaßbar ist. Insbesondere soll eine offenzellige Schaumstruktur erzeugt werden, die den Durchlaß von Gasen und Fluiden ermöglicht und eine selektiv einstellbare gezielte Aufnahme polarer/nichtpolarer Fluide sowie ein gezieltes Haltevermögen polarer Fluide ermöglicht.

Erfindungsgemäß wird diese Aufgabe mit einem Verfahren gemäß den kennzeichnenden Merkmalen des Anspruches 1 gelöst.

Das erfindungsgemäße Verfahren zum Herstellen einer zumindest teilweise offenzelligen Schaumfolie auf Basis von Styrolpolymerisaten zeichnet sich dadurch aus, daß ein Gemisch enthaltend auf 100 Gew.-Teile Styrolpolymerisat
0,5 bis 3 Gew.-Teile mindestens eines Nukleierungsmittels
0.5 bis 3,5 Gew.-Teile mindestens eines Tensids und
1 bis 3 Gew.-Teile eines mit Polystyrol nicht mischbaren Fremdpolymers,
in einem Doppelschneckenextruder mit gleichsinnig rotierenden Schnecken bei einer Temperatur bis zu 270°C aufgeschmolzen und
2 bis 6 Gew.-% mindestens eines physikalischen Treibmittels bezogen auf die eingesetzte Menge des Styrolpolymerisats mit einem Einspritzdruck, der oberhalb des Zylinderdruckes des Doppelschneckenextruders an der Einspritzstelle liegt und höher ist als der zur Lösung des Treibmittels im Polymer bzw. ausreichend hoch ist, ein homogen verteiltes zweiphasiges System Schmelze/Treibmittel zu ermöglichen, in die Polymerschmelze injiziert und die Polymerschmelze unter homogener Vermischung auf eine Massetemperatur zwischen 160 bis 180°C vor Austritt aus dem Doppelschneckenextruder in das Düsenwerkzeug mit ringförmiger Düse gebracht wird und unter Druck von bis zu 55 bar als Schlauch aus der Düse in die Atmosphäre extrudiert wird, der Schlauch unter Aufschäumung innenseitig und außenseitig gekühlt wird und über einen Kühl- und Kalibrierdorn gezogen wird und nach ausreichender Verfestigung aufgeschnitten und zu der Schaumfolie flachgelegt wird.

Der Einspritzdruck liegt insbesondere im Bereich von 30 bis 160 bar.

Vorteilhafte Weiterbildungen der Erfindung sind den kennzeichnenden Merkmalen der Verfahrensansprüche entnehmbar.

Des weiteren ist Gegenstand der Erfindung eine Vorrichtung zum Herstellen einer zumindest teilweise offenzelligen Schaumfolie auf Basis von Styrolpolymerisaten, Nukleierungsmittel, Tensid, physikalischem Treibmittel und gegebenenfalls weiteren Additiven, wie Fremdpolymer und Hilfsstoffen umfassend einen Doppelschneckenextruder mit einer Einzugs- und Plastifizierzone, Mischzone und Kühlzone, wobei die Styrolpolymerisate mit dem Nukleierungsmittel, Tensid, Additiven, gegebenenfalls zumindest teilweise als Vormischung, dem Doppelschneckenextruder zugeführt und zu einer Polymerschmelze aufgeschmolzen werden und in die Polymerschmelze unter erhöhtem Druck das physikalische Treibmittel injiziert wird, die begaste Polymerschmelze auf eine zum Aufschäumen geeignete, unterhalb der Aufschmelztemperatur des Styrolpolymerisates liegende Temperatur gekühlt wird und danach aus der Düse des Doppelschneckenextruders in Schlauchform unter Aufschäumen in die Atmosphäre austritt, und der Schlauch abgekühlt wird und in Längsrichtung aufgeschnitten und zu einer Schlauchfolie flachgelegt wird.

Zur Lösung der erfindungsgemäßen Aufgabe wird diese Vorrichtung erfindungsgemäß in der Weise weitergebildet, daß als Extruder zum Aufschmelzen des Polymers, Mischen der Polymerschmelze mit dem physikalischen Treibmittel und Abkühlen der so erhaltenen schäumfähigen Polymerschmelze ein Doppelschneckenextruder einer Länge von mindestens 25 D, insbesondere 30 bis 42 D mit gleichen und gleichsinnig rotierenden parallelen Schnecken vorgesehen ist und das physikalische Treibmittel von der Fördereinrichtung mit einem Einspritzdruck kleiner 160 bar, insbesondere zwischen 30 bis 150 bar, am Ende der etwa 10 bis 15 D langen Einzugs- und Plastifizierzone des Doppelschneckenextruders in das aufgeschmolzene Polymer einleitbar ist und in der sich an die Einzugs- und Plastifizierzone anschließenden Mischzone mit einer 3 bis 6 D entsprechenden Länge des Doppelschneckenextruders mit dem aufgeschmolzenen Polymer zu einer schäumfähigen Polymerschmelze vermischbar ist.

Vorteilhafte Weiterbildungen der erfindungsgemäßen Vorrichtung sind den kennzeichnenden Merkmalen der Unteransprüche entnehmbar.

Erfindungsgemäß kann Polystyrolschaum mit offenzelliger Schaumstruktur geschaffen werden für den Durchlaß von Gasen und Fluiden und mit einer selektriv einstellbaren gezielten Aufnahme polarer und nichtpolarer Flüssigkeiten. Das Haltevermögen für Fluide ist abhängig von der Oberflächenspannung der aufgenommenen Flüssigkeit. Bei einer anfangs hohen Tensidaufnahme ist eine anfangs hohe Benetzungswirkung die Folge, jedoch steigt das Haltevermögen für polare Flüssigkeiten bei Konzentrationsabnahme des Tensids an der Zellwand. Das Tensid ist zur Aufnahme-Benetzung polarer Fluide erforderlich.

Als Styrolpolymerisat für die herzustellenden Schaumfolien werden sowohl die Homo- und Copolymere des Styrols eingesetzt, ebenso auch Mischungen oder Blends des Polystyrols mit anderen Stoffen, ebenso die durch Polymerisation von Styrol durch Wärme oder mit Peroxid-Katalysatoren hergestellten hochmolekularen Stoffe, wie die durch Substanz-Polymerisation hergestellten Produkte, ebenso die Copolymerisate des Styrols mit Acrylnitril und/oder Butadien bzw. Acrylnitril und Acrylestern bzw. die Pfropf-Polymerisate, bei denen Styrol unter Zugabe von natürlichem oder synthetischem Kautschuk polymerisiert wird, wie Styrolbutadien-Kautschuk. Bevorzugt werden für die erfindungsgemäßen Schaumfolien Styrolhomopolymerisate eingesetzt.

Mit dem erfindungsgemäßen Verfahren gelingt es in einem physikalischen Treibverfahren unter Einsatz von Doppelschneckenextrudern Schaumfolien aus Styrolpolymerisaten mit einem Anteil an offenen Zellen von mindestens 25 % herzustellen. Hierbei werden Schaumfolien mit einer Dichte von 40 bis 100 kg/m³ oder mehr erhalten, wobei Schaumfolien einer Dicke von 0,3 bis 10 mm, vorzugsweise 1 bis 5 mm, erzeugt werden. Die Schaumfolien haben bevorzugt eine mittlere Zellgröße im Bereich von 150 µm bis 900 µm.

Erfindungsgemäß wird ein Extrusionsverfahren mit einem Aufschäumverfahren nach Art eines Aufblasverfahrens eingesetzt. Die schäumfähige Polymerschmelze, die aus einer ringförmigen Düse des Extruders in Schlauchform austritt, wird sogleich innen- und außenseitig gekühlt, beispielsweise mittels Kühlluft und innen mit Druck beaufschlagt, um ein Aufblasverhältnis von größer 1, insbesondere 1:3 bis 1:5 zu erzielen, und nach dem Aufblasen den Schlauch innenseitig mittels eines Kühl- und Kalibrierdornes zu kalibrieren und durch den Kontakt mit dem Kühl- und Kalibrierdorn zu kühlen. Hierbei kann die als Schlauch produzierte Schaumfolie auch noch einem Reckungsprozeß unterworfen werden. Das gewünschte Aufblasverhältnis ist primär auch von der angestrebten Dichte abhängig.

Als physikalische Treibmittel kommen insbesondere organische Treibmittel aus der Gruppe der aliphatischen Kohlenwasserstoffe mit 1 bis 9 Kohlenstoffatomen, wie Methan, Ethan, Propan, n-Butan, losbutan, N-Pentan, Isopentan und/oder Neopentan und/oder anorganische Treibmittel wie Kohlendioxid, Stickstoff in Frage. Hierbei kann entweder nur ein einziges Treibmittel oder aber auch Mischungen von Treibmitteln eingesetzt werden. Im Falle des Einsatzes von Mischungen von Treibmitteln, d.h. bei Einsatz von zwei oder mehr verschiedenen Treibmitteln, werden diese der Polymerschmelze getrennt und unmittelbar nacheinander zugeführt. Die Treibmittel werden dabei insbesondere mit einer Druckfördereinrichtung mit hoher Genauigkeit, Dosiervorrichtung in die Polymerschmelze injiziert. Wesentlich für das erfindungsgemäße Verfahren ist die Einhaltung eines Injektionsdruckbereiches, der bevorzugt zwischen 30 bis 160 bar, vorzugsweise zwischen 30 bis 70 bar liegt. Hierbei ist der Einspritzddruck höher als der Druck oberhalb des Zylinderdruckes an der Einspritzstelle, des weiteren muß er höher als der zur Lösung des Treibmittels im Polymer erforderliche Druck bzw. ausreichend hoch sein, ein homogen verteiltes zweiphasiges System Schmelze/Treibstoff zu ermöglichen.

Die Menge des physikalischen Treibmittels richtet sich einerseits nach der gewünschten Dichte des Schaumstoffes, zum anderen auch nach dem Grad der Offenzelligkeit. Bei Einsatz von aliphatischen Kohlenwasserstoffen, insbesondere aus der Gruppe n-Butan, n-Pentan, Isopentan oder Mischungen hiervon, haben sich 3 bis 4 Gew.-Teile Treibmittel bezogen auf 100 Gew.-Teile Styrolpolymerisat als geeignet erwiesen.

Polymer/Treibmittel-Gemische können sein einphasig (Treibmittel vollständig gelöst oder Treibmittel teilweise gelöst, teilweise flüssig) oder mehrphasig (Schmelze flüssig, Treibmittel gasförmig, fein dispergiert bzw. Treibmittel oberhalb der Lösungsgrenze ist gasförmig (CO₂/N₂)).

Der Gehalt an offenen Zellen kann auch über das Nukleierungsmittel eingestellt werden, wobei höhere Mengen an Nukleierungsmittel den Anteil der offenen Zehen der Schaumfolie steigern. Geeignete Nukleierungsmittel sind Calciumcarbonat, Calciumstearat, Talkum, Titandioxid, Silica, Bariumstearat, Kieselgur und/oder Mischungen von Zitronensäure und Natriumbicarbonat. Besonders bevorzugt sind Mischungen von Zitronensäure und Natriumbicarbonat, wobei hier Mengen von 0,6 bis 1,5 Gew.-Teilen auf 100 Gew.-Teile Styrolpolymerisat als ausreichend sich erwiesen haben.

Ein hohes Temperaturprofil, was zugleich hohen Gasdruck bewirkt, führt bei geringer Wandfestigkeit der Zellen zur Offenzelligkeit

Eine weitere Möglichkeit, die Offenzelligkeit und den Anteil der offenen Zellen in der Schaumfolie zu fördern, besteht in dem Zusatz eines Fremdpolymers in geringen Mengen, wobei hier Fremdpolymere, die mit Styrolpolymerisaten nicht mischbar sind, eingesetzt werden, wie beispielsweise Polyolefine oder Ethylen-Vinylacetat-Copolymer. Von den Polyolefinen kommen insbesondere HDPE, LDPE und LLDPE oder auch Polyolefin-Wachse in Frage.

Grenzflächen zu den Fremdpolymeren bilden infolge niedriger Oberflächenspannung Sollbenetzungsstellen.

Sofern die Absorptionsfähigkeit und Saugfähigkeit der hergestellten Schaumfolie erhöht werden soll, kann es zweckmäßig sein zur Erhöhung der Aufnahmefähigkeit für wässrige Flüssigkeiten insbesondere polare Fluide Tenside, insbesondere auf Basis von Alkansulfonaten der Polymermischung zuzugeben. Ebenso können Tenside mit antistatischer Wirkung eingesetzt werden. Das Haltevermögen für Fluide ergibt sich über die Oberflächenspannung der aufgenommenen Flüssigkeit. Tenside sind zur Aufnahme polarer Flüssigkeiten erforderlich. Die Absorptionsfähigkeit wird primär durch die Anzahl offener Zellen, sekundär durch die Schaummorphologie und bezogen auf die selektive Stoffaufnahme durch Ausrüstung mit Tensid bestimmt und kontrolliert.

Darüber hinaus ist es auch möglich, der Polymermischung Hilfsstoffe wie anorganische Füllstoffe, Pigmente, Antioxidantien, UV-Absorber, Flammschutzmittel, Ruß, Antistatika, Verarbeitungshilfmittel, Gleitmittel und/oder Wachse in üblichen Mengen zuzugeben.

Darüber hinaus ist es auch möglich, das erfindungsgemäße Verfahren mit einer Polymermischung einzusetzen, bei der bis zu 50 Gew.-% oder gegebenenfalls auch mehr eines Regeneratstyrolpolymerisates anstelle von Frischmaterial eingesetzt wird.

Eine beispielsweise für die Herstellung von Verpackungsschalen geeignete zumindest teilweise offenzellige Schaumstoffolie kann erfindungsgemäß aus einer Zusammensetzung aus 100 Gew.-Teilen Polystyrol,
3 bis 4 Gew.-Teilen Treibmittel ausgewählt aus der Gruppe n-Butan, n-Pentan, Isopentan oder Mischungen hiervon,
0,6 bis 1,5 Gew.-Teile Nukleierungsmittel aus Natriumbicarbonat und Zitronensäure mit einer Zersetzungstemperatur größer 160°C,
1 bis 3,5 Gew.-Teile eines in polaren Substanzen wie Polystyrol gut wirksamen Tensids und
1 bis 3 Gew.-Teilen eines mit Polystyrol nicht mischbaren Fremdpolymers, wie eines Polyolefins oder Ethylen-Vinylacetat-Copolymers hergestellt werden. Die solchermaßen hergestellten Schaumfolien weisen grundsätzlich eine dichte Außenhaut auf und eine zumindest teilweise offenzellige Kernschicht, wobei diese Außenhaut auf der Kalibrierseite glatter als auf der nicht kalibrierten Seite ist. Die Saugfähigkeit wird dadurch hergestellt, daß eine oder beide Seiten der Schaumfolie genadelt oder durch Aufrauhung oder Lochen geöffnet werden. Bei dicken Schaumfolien ist es auch möglich, diese zu spalten, wobei man eine Folie erhält, die auf einer Seite flüssigkeitsdicht verbleibt und auf der anderen Seit vollständig geöffnet für die Aufnahme von Flüssigkeiten ist.

Als besonders günstig für die Verarbeitung in einer Polymermischung haben sich Nukleierungsmittel auf Basis von Natriumbicarbonat und Zitronensäure erwiesen, die mit einem Polymerbindemittel auf Basis eines Acrylatpolymerisates bevorzugt in einem Verhältnis von Nukleierungsmittel zu Polymerbindemittel im Bereich von 55:45 bis zu 65:35 gebunden sind.

Das erfindungsgemäße Herstellen einer zumindest teilweise offenzelligen Schaumfolie auf Basis Styrolpolymerisaten basiert auf der Auswahl einer geeigneten Rohstoffmischung in Verbindung mit einem speziell designten Doppelschneckenextruder mit gleichen und gleichsinnig rotierenden parallelen Schnecken, Begasen mit einem physikalischen Treibmittel bei relativ geringen Drücken. Insbesondere wird das Aufschmelzen des Styrolpolymerisates, Injizieren des physikalischen Treibmittels in die Polymerschmelze und Kühlen der so erhaltenen begasten schäumfähigen Polymerschmelze auf die Austrittstemperatur in einem Doppelschneckenextruder mit einer Einzugs- und Plastifizierzone, Mischzone und Kühlzone und ringförmiger Austrittsdüse einer Länge von mindestens 25 D, insbesondere 30 bis 42 D (D = Schneckendurchmesser) mit gleichen und gleichsinnig rotierenden parallelen Schnecken durchgeführt, und das physikalische Treibmittel mit einem Einspritzdruck, bevorzugt kleiner 160 bar, insbesondere zwischen 30 bis 160 bar, vorzugsweise 30 bis 70 bar am Ende der Einzugs- und Plastifizierzone des Doppelschneckenextruders in die Polymerschmelze geleitet und in der sich an die Einzugs- und Plastifizierzone anschließenden Mischzone mit der Polymerschmelze zu einer schäumfähigen Polymerschmelze homogenisiert und auf die Austrittstemperatur gekühlt wird. Gemäß einem weiteren Vorschlag der Erfindung wird das Verfahren so durchgeführt, daß der Doppelschneckenextruder mit einer solchen Menge an Polymer gespeist wird, daß er mit stehender Säule oder unterfüttert betrieben wird. Dadurch kann die Vermischung des Polymers mit dem Nukleierungsmittel und dem physikalischen Treibmittel intensiviert und somit ein noch besseres Ergebnis erzielt werden.

Für das erfindungsgemäße Verfahren und die Vorrichtung können Doppelschneckenextruder mit Schneckendurchmessern von vorzugsweise 40 bis 130 mm, besonders bevorzugt 65 bis 125 mm eingesetzt werden. Die Einzugs- und Plastifizierzone wird in einer etwa 10 bis 15 D entsprechenden Länge ausgeführt, um ein vollständiges Schmelzen des mit dem Nukleierungsmittel versehenen Polymers zu gewährleisten. Das erfindungsgemäße Verfahren ermöglicht durch die besonders intensiven Mischungsvorgänge im Doppelschneckenextruder, die spezielle Mischzone, in der das physikalische Treibmittel in die Polymerschmelze eingeleitet wird, sehr kurz, nämlich etwa 3 bis 6 D auszuführen und dennoch eine besonders gleichmäßige Struktur und gute Oberflächenqualität der geschäumten Folie zu erhalten. An diese Mischzone schließt sich bei einer Gesamtlänge von etwa 30 bis 42 D des Doppelschnekkenextruders ein genügend langer Abschnitt an, ausgeführt als Kühlzone, um die schäumfähige Polymerschmelze beim Homogenisieren von der Aufschmelztemperatur bis zu 270°C auf eine Massetemperatur zwischen 160 bis 180°C vor Austritt aus dem Doppelschneckenextruder zu temperieren.

Vorteilhaft werden dem Polymer bereits bei der Zuführung zu dem Doppelschneckenextruder Nukleierungsmittel beigegeben, um das spätere Aufschäumen zu erleichtern. Verschiedene Treibmittel werden der Polymerschmelze getrennt und unmittelbar nacheinander am Ende der Einzugs- und Plastifizierzone des Doppelschneckenextruders zugeführt.

Zur Herstellung der Schaumfolie aus Styrolpolymerisaten wird das schäumfähige Polymer bevorzugt aus einer ringförmigen Düse extrudiert und der gebildete rohrförmige Schlauch nach seinem Austreten aus der Düse innen- und/oder außenseitig gekühlt, vorzugsweise mit Kühlluft beaufschlagt. Diese Beaufschlagung kann beispielsweise durch Anblasen erfolgen. Die Kühlluft sollte hier eine Temperatur bevorzugt im Bereich zwischen 5 bis 50°C, bevorzugt unter Raumtemperatur aufweisen. Auch ist es möglich, den Schlauch mittels entsprechender an der Düse angebrachter Kühlringe, außenseitig und/oder innenseitig mittels Kühlluft anzublasen.

Des weiteren kann der aus der ringförmigen Düse austretende geschäumte Schlauch zur Querverstreckung innenseitig mit Druckluft beaufschlagt werden, so daß der Schlauch aufgeblasen wird und der Durchmesser des rohrförmigen Schlauches vergrößert wird und der rohrförmige Schlauch gereckt wird. Die Längsverstreckung wird durch den Abzug der Schaumfolie bewirkt, d.h. eine entsprechend höhere Abziehgeschwindigkeit in bezug auf die Austrittsgeschwindigkeit aus der Düse. Der derart aufgeblasene Schlauch wird nachfolgend über einen Kühl- und Kalibrierdorn geführt, der mittels Kontaktkühlung den rohrförmigen Schlauch weiter abkühlt und diesen zugleich in seinem Durchmesser kalibriert. Der Kühl- und Kalibrierdorn wird mittels durchströmenden Wassers temperiert, das mittels eines Temperiergerätes auf einer geeigneten Temperatur unterhalb 65°C, vorzugsweise im Bereich von 25 bis 65°C temperiert wird. Das mit dem erfindungsgemäßen Verfahren erreichbare Aufblasverhältnis, d. h. das Verhältnis vom Durchmesser der Austrittsöffnung des Schlauches aus der ringförmigen Düse zum Kühl- und Kalibrierdorndurchmesser beträgt etwa 1:2 bis 1:5 je nach Dichte.

Nachdem der geschäumte Schlauch über den Kühl- und Kalibrierdorn geführt ist und ausreichend abgekühlt ist, wird er zur Bildung einer flachen Folienbahn entweder längs einer Seite kontinuierlich aufgeschnitten oder an zwei einander gegenüberliegenden Seiten zu zwei Schaumfolienbahnen.

Die derart gebildeten flachgelegten Schaumfolien werden kontinuierlich von einer Abzugseinrichtung abgezogen und können entweder aufgewickelt oder inline einer Weiterverarbeitung, wie einer Laminierstation oder Tiefziehstation zugeführt werden.

Die nach dem erfindungsgemäßen Verfahren hergestellte Schaumfolie kann unmittelbar mit einer geeigneten funktionalen Schicht, etwa einer ein- oder mehrschichtigen kompakten, d. h. ungeschäumten Folie aus einem thermoplastischen Kunststoff oder einem anderen Material ein- oder beidseitig laminiert werden. Das Laminieren läßt sich vorteilhaft inline an die Herstellung der Schaumfolie anschließen.

In besonders vorteilhafter Ausgestaltung der Erfindung wird überdies vorgeschlagen, daß die begaste schäumfähige Polymerschmelze innerhalb der ringförmigen Düse vor dem Austritt mit mindestens einem kompakten oder schäumfähigen extrudierbaren Material, beispielsweise einem thermoplastischen Kunststoff beschichtet wird. Für die Zuführung jedes thermoplastischen Kunststoffes ist dann jeweils ein weiterer Extruder vorgesehen, wobei die Austrittsdüse des Doppelschneckenextruders als Koextrusionsdüse ausgebildet ist.

Die Erfindung wird nachfolgend anhand eines Ausführungsbeispieles und der Zeichnung näher erläutert. Es zeigen:
- Figur 1: eine schematische Ansicht einer Vorrichtung zur Durchführung des Verfahrens,
- Figur 2: eine vergrößerte auszugsweise Darstellung der teilweise offenzelligen Schaumfolie gemäß Ausführungsbeispiel.

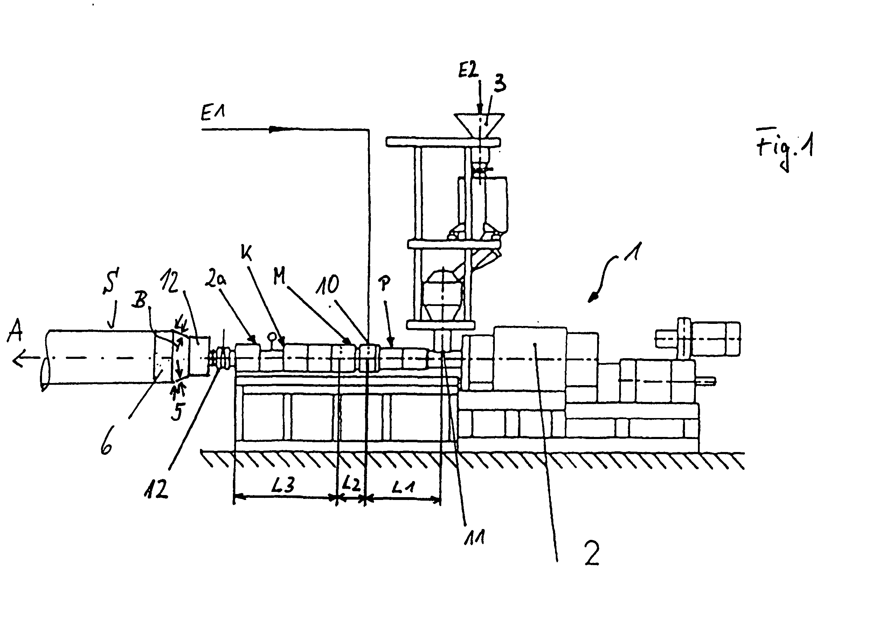

Wie in der Figur 1 dargestellt umfaßt die Vorrichtung zur Herstellung einer Schaumfolie aus Styrolpolymerisaten einen Doppelschneckenextruder 1 mit einem Zylinder mit innenliegenden gleichen und gleichsinnig rotierenden parallelen Schnecken, an dessen Austrittsende eine bevorzugt ringförmige Düse 12 befestigt ist. Der Doppelschneckenextruder 1 wird von dem Antrieb 2 angetrieben.

Das zur Herstellung der geschäumten Folie verwendete Polymer, beispielsweise ein Polystyrol wird aus einem Silo 13 über eine Förderleitung E2 zu einer Dosiervorrichtung 3 gefördert, in der es mit dem Nukleierungsmittel, Fremdpolymer, Tensid und gegebenenfalls weiteren Additiven vermischt wird. Von der Dosiervorrichtung 3 gelangt dieses Gemisch über die Einzugsöffnung 11 im Zylinder in den Doppelschneckenextruder 1.

Von der Einzugsöffnung 11 des Doppelschneckenextruders 1 erstreckt sich eine Einzugs- und Plastifizierzone in Arbeitsrichtung A des Doppelschnekkenextruders 1, die eine Länge L1 von etwa 10 bis 15 D aufweist, wobei D der Schneckendurchmesser ist. In dieser Einzugs- und Plastifizierzone wird das Polymer auf Temperaturen bis höchstens 270°C erwärmt und aufgeschmolzen und ist am Ende der Einzugs- und Plastifizierzone vollständig plastifiziert.

Am Ende der Einzugs- und Plastifizierzone wird das physikalische Treibmittel, welches von einer nicht dargestellten Fördereinrichtung über eine Leitung E1 zugeführt wird, über eine Öffnung 10 im Zylinder des Doppelschneckenextruders 1 in die Polymerschmelze eingeleitet. Die derart begaste Polymerschmelze wird nachfolgend in der sich an die Öffnung anschließende Mischzone M des Doppelschneckenextruders 1, die eine Länge L2 von etwa 3 bis 6 D aufweist, von den gleichsinnig rotierenden Schnecken des Doppelschneckenextruders 1 intensiv durchgemischt, so daß eine schäumfähige Polymerschmelze mit besonders gleichmäßiger und feiner Verteilung des Treibmittels erhalten wird.

In der sich an die Mischzone M anschließenden Kühlzone mit einer Länge L3 des Doppelschneckenextruders 1 wird die schäumfähige Schmelze weiter homogenisiert und gemischt, wobei sie jedoch auf eine für das Austreten aus der Düse geeignete Temperatur durch entsprechende Kühlung des Zylinders der Doppelschnecke in der Kühlzone temperiert wird, d. h. auf eine Temperatur von etwa 160 bis 180°C bei ihrem Austritt aus der ringförmigen Düse 12. Die Gesamtlänge L des Doppelschneckenextruders 1 beträgt vorzugsweise 30 bis 42 D, wobei D im Bereich von 50 bis 130 gewählt ist.

Die schäumfähige Schmelze tritt aus der ringförmigen Düse 12 als rohrförmiger Schlauch S aus und wird außenseitig durch Anblasen mittels Kühlluft 5 von Umgebungstemperatur bevorzugt unter 10°C gekühlt.
Gleichzeitig wird der Schlauch S von der gemäß Pfeil B herangeführten und entgegen der Austrittsrichtung des Schlauches S in dessen Innenraum eingeblasenen Druckluft aufgeblasen und gekühlt, d. h. sein Durchmesser vergrößert sich. Nachfolgend wird der Schlauch S mit seinem vergrößerten Durchmesser über einen Kühl- und Kalibrierdorn 6 gezogen. Der Kühl- und Kalibrierdorn 6 wird von einem Temperiergerät mit einem Kühlmedium versorgt, so daß der Schlauch S eine weitere innenseitige Abkühlung durch Kontakt mit dem Kühl- und Kalibrierdorn 6 erfährt. Das Aufblasverhältnis, d. h. der Durchmesser der Austrittsöffnung des Schlauches S aus der ringförmigen Düse 12 zu dem des Kühl- und Kalibrierdorns 6 beträgt etwa 1:2 bis 1:5.

Nach der weiteren Abkühlung des Schlauches S an den Außenflächen des Kühl- und Kalibrierdornes 6 ist der Schlauch S so weit verfestigt, daß er von einer nicht dargestellten Schneideinrichtung, beispielsweise Messern, an zwei gegenüberliegenden Bereichen in Längsrichtung aufgeschnitten werden kann. Dabei bilden sich aus dem Schlauch S zwei Schaumfolien-Bahnen, die flachgelegt und von einer mehrere Abzugsrollen enthaltenden Abzugseinrichtung, nicht dargestellt, abgezogen werden.

Durch geeignete Wahl der Abzugsgeschwindigkeit der nicht dargestellten Abzugseinrichtung ist es überdies möglich, die verfestigten aber noch nicht erstarrten Schaumfolien in Längserstreckung zu recken zur Vermeidung der Faltenbildung und zum Erzielen einer glatten Oberfläche.

Zur Herstellung von geschäumten Folien, die mit einer kompakten oder geschäumten Folie aus einem anderen thermoplastischen Kunststoff beschichtet sein sollen, wie es etwa für Lebensmittelverpackungen oder Isolierungen erforderlich sein kann, kann überdies die ringförmige Düse 12 als Koextrusionsdüse ausgeführt sein, um bereits die begaste Polymerschmelze vor ihrem Austritt aus der Düse 12 mit mindestens einem weiteren Material zu beschichten, wobei für die Zuführung jedes weiteren Materials vorteilhaft jeweils ein weiterer sogenannter Koextruder verwendet wird.

### Beispiel:

Ein Doppelschneckenextruder mit zwei gleichen und gleichsinnig rotierenden parallelen Schnecken von je 85 mm Durchmesser (D) wurde bei einer Schnekkendrehzahl von 30 U/min mit einer Rezeptur von 100 Gew.-Teilen Styrolhomopolymer, 1,4 Gew.-Teilen Nukleierungsmittel aus einer Mischung enthaltend 55 Gew.-% Zitronensäure und Bicarbonat mit einer Zersetzungstemperatur höher als 160°C und 45 Gew.-% Acrylat-Polymer-Bindemittel, sowie 2,5 Gew.-Teilen eines Alkyl-Sulfonates als Tensid und 1,9 Gew.-Teilen eines HDPE-Granulates als Fremdpolymer über eine Dosiervorrichtung mit 200 bis 250 kg/h gespeist. Innerhalb der 15 D langen und auf eine Temperatur zwischen 220 bis 270°C beheizten Einzugs- und Plastifizierzone wurde das Polymer vollständig plastifiziert. Am Ende der Einzugs- und Plastifizierzone mit einer Temperatur von etwa 220°C wurden 3,5 Gew.-Teile n-Butan als physikalisches Treibmittel mit einem Druck von 65 bar in die Polymerschmelze injiziert und die so begaste Polymerschmelze in einer 4 D langen Mischzone gemischt. Nachfolgend wurde die begaste Polymerschmelze beim weiteren Durchmischen in der etwa 14 D langen Kühlzone bis zum Austritt aus der Düse temperiert und auf eine Temperatur von etwa 167°C im Zylinder vor Austritt aus der Düse gebracht. Die schäumfähige geschmolzene Masse wurde mit einer Temperatur von etwa 167°C bei einem Druck von 40 bar durch die Ringdüse extrudiert, wobei der Düsenspalt 1,4 mm betrug. Der austretende aufschäumende Schlauch wurde im Verhältnis von 1:2,5 aufgeblasen mit Druckluft von Raumtemperatur und nachfolgend über einen von einem Temperiergerät gekühlten Kühl- und Kalibrierdorn mit einer Abzugsgeschwindigkeit von 11 m/min abgezogen, wobei der Schlauch beim Aufblasen außenseitig mittels Kühlluft von Raumtemperatur 15°C oder weniger beaufschlagt wurde. Nach erfolgter Abkühlung auf eine Temperatur unterhalb von 150°C und Verfestigung wurde der Schlauch in Längserstreckung beidseitig aufgeschnitten und die so erhaltenen Schaumfolien flachgelegt und nachfolgend aufgewickelt.

Die erhaltene Schaumfolie weist eine Dicke von 2,5 mm, ein Raumgewicht von 0,07 g/cm³ und eine teilweise offenzellige Struktur mit einem mittleren Durchmesser der Zellen von 500 bis 700 mm auf. Die Schaumfolie ist in der Lage, nach Öffnen der Oberflächenhaut durch Lochen mindestens das Sechsfache ihres Eigengewichtes an Wasser aufzunehmen.

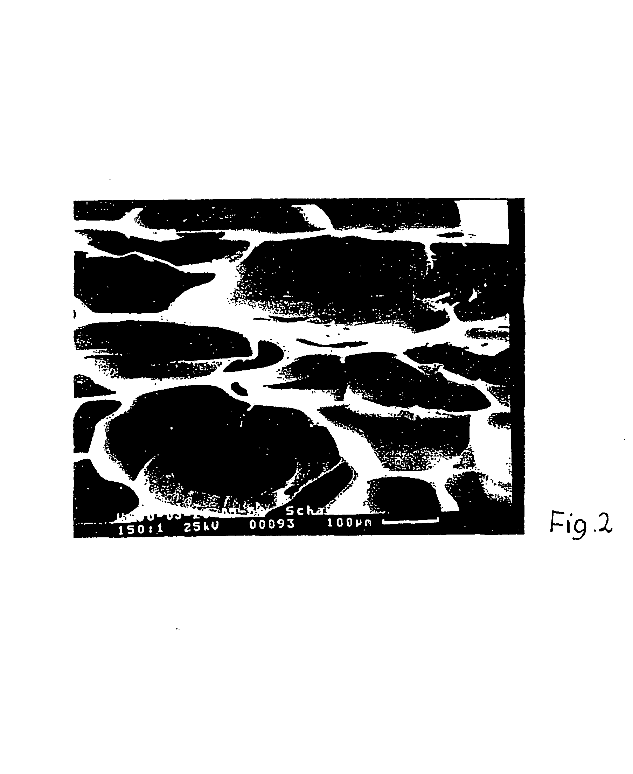

In der Figur 2 ist ein vergrößerter Ausschnitt aus dem Innern einer Schaumfolie gemäß Beispiel mit teilweise offenzelliger Zellstruktur dargestellt, wobei dem Maßstab 1 cm 100 µm entsprechen.

## Patentansprüche

1. Verfahren zum Herstellen einer zumindest teilweise, offenzelligen Schaumfolie auf Basis von Styrolpolymerisaten, **dadurch gekennzeichnet, daß** ein Gemisch enthaltend auf 100 Gew.-Teile Styrolpolymerisat
0,5 bis 3 Gew.-Teile mindestens eines Nukleierungsmittels
0,5 bis 3,5 Gew.-Teile mindestens eines Tensids und
1 bis 3 Gew.-Teile eines mit Polystyrol nicht mischbaren Fremdpolymers,
in einem Doppelschneckenextruder mit gleichsinnig rotierenden Schnekken bei einer Temperatur bis zu 270°C aufgeschmolzen und
2 bis 6 Gew.-% mindestens eines physikalischen Treibmittels bezogen auf die eingesetzte Menge des Styrolpolymerisats mit einem Einspritzdruck, der oberhalb des Zylinderdruckes des Doppelschneckenextruders an der Einspritzstelle liegt und höher ist als der zur Lösung des Treibmittels im Polymer bzw. ausreichend hoch ist, ein homogen verteiltes zweiphasiges System Schmelze/Treibmittel zu ermöglichen, vorzugsweise unter Druck von 30 bis 160 bar in die Polymerschmelze injiziert und die Polymerschmelze unter homogener Vermischung auf eine Massetemperatur zwischen 160 bis 180°C vor Austritt aus dem Doppelschneckenextruder in das Düsenwerkzeug mit ringförmiger Düse gebracht wird und unter Druck von bis zu 55 bar als Schlauch aus der Düse in die Atmosphäre extrudiert wird, der Schlauch unter Aufschäumung innenseitig und außenseitig gekühlt wird und über einen Kühl- und Kalibrierdorn gezogen wird und nach dem Verfestigen aufgeschnitten und zu der Schaumfolie flachgelegt wird.

2. Verfahren nach Anspruch 1, **dadurch gekennzeichnet, daß** eine Schaumfolie mit einem Anteil an offenen Zellen von mindestens 25 % erhalten wird.

3. Verfahren nach Anspruch 1 oder 2, **dadurch gekennzeichnet, daß** eine Schaumfolie mit einer Dichte von 40 bis 100 kg/m³ oder mehr erhalten wird.

4. Verfahren nach einem der Ansprüche 1 bis 3, **dadurch gekennzeichnet, daß** Schaumfolien einer Dicke von 0,3 bis 10 mm, vorzugsweise 1 bis 5 mm erhalten werden.

5. Verfahren nach einem der Ansprüche 1 bis 4, **dadurch gekennzeichnet, daß** als physikalische Treibmittel organische Treibmittel aus der Gruppe der aliphatischen Kohlenwasserstoffe mit 1 bis 9 Kohlenstoffatomen , wie Methan, Ethan, Propan, n-Butan, lsobutan, n-Pentan, Isopentan und/oder Neopentan und/oder anorganische Treibmittel wie Kohlendioxid, Stickstoff eingesetzt werden.

6. Verfahren nach einem der Ansprüche 1 bis 5, **dadurch gekennzeichnet, daß** als Nukleierungsmittel Calciumcarbonat, Calciumstearat, Talkum, Titandioxid, Silica, Bariumstearat, Kieselgur und/oder Mischungen von Zitronensäure und Natriumbicarbonat verwendet werden.

7. Verfahren nach einem der Ansprüche 1 bis 6, **dadurch gekennzeichnet, daß** zur Erhöhung der Aufnahmefähigkeit für polare Flüssigkeiten Tenside auf Basis von Alkansulfonaten eingesetzt werden.

8. Verfahren nach einem der Ansprüche 1 bis 7, **dadurch gekennzeichnet, daß** der Polymermischung Hilfsstoffe, wie anorganische Füllstoffe, Pigmente, Antioxidantien, UV-Absorber, Flammschutzmittel, Ruß, Antistatika, Verarbeitungshilfsmittel, Gleitmittel und/oder Wachse zugegeben werden.

9. Verfahren nach einem der Ansprüche 1 bis 8, **dadurch gekennzeichnet, daß** als Fremdpolymer ein Polyolefin oder Ethylen-Vinylacetat-Copolymer eingesetzt wird.

10. Verfahren nach einem der Ansprüche 1 bis 9, **dadurch gekennzeichnet, daß** der aus der Düse austretende und aufschäumende Schlauch außenseitig und/oder innenseitig mittels Kühlluft einer Temperatur von oder unterhalb Raumtemperatur gekühlt wird.

11. Verfahren nach einem der Ansprüche 1 bis 10, **dadurch gekennzeichnet, daß** der aus der Düse austretende und aufschäumende Schlauch innenseitig mittels des auf eine Temperatur von 25 bis 65°C temperierten Kühl- und Kalibrierdornes gekühlt wird.

12. Verfahren nach einem der Ansprüche 1 bis 11, **dadurch gekennzeichnet, daß** das Aufschmelzen des Styrolpolymerisates, Injizieren des physikalischen Treibmittels in die Polymerschmelze und Kühlen der so erhaltenen begasten schäumfähigen Polymerschmelze in einem Doppelschneckenextruder mit einer Einzugs- und Plastifizierzone, Mischzone und Kühlzone und ringförmiger Austrittsdüse einer Länge von mindestens 25 D, insbesondere 30 bis 42 D (D = Schneckendurchmesser) mit gleichen und gleichsinnig rotierenden parallelen Schnecken durchgeführt wird und das physikalische Treibmittel mit einem Druck kleiner 160 bar, insbesondere zwischen 30 bis 160 bar, vorzugsweise 30 bis 70 bar am Ende der Einzugs- und Plastifizierzone des Doppelschneckenextruders in die Polymerschmelze geleitet wird und in der sich an die Einzugs- und Plastifizierzone anschließenden Mischzone mit der Polymerschmelze zu einer schäumfähigen Polymerschmelze homogenisiert und auf die Austrittstemperatur gekühlt wird.

13. Verfahren nach einem der Ansprüche 1 bis 12, **dadurch gekennzeichnet, daß** der Doppelschneckenextruder mit einer solchen Menge an Polymer gespeist wird, daß dieser unterfüttert betrieben wird.

14. Verfahren nach einem der Ansprüche 1 bis 13, **dadurch gekennzeichnet, daß** bei Einsatz von zwei oder mehr verschiedenen Treibmitteln diese der Polymerschmelze getrennt und unmittelbar nacheinander zugeführt werden.

15. Verfahren nach einem der Ansprüche 1 bis 14, **dadurch gekennzeichnet, daß** der aus der ringförmigen Düse austretende Schlauch innen- und/oder außenseitig mit Kühlluft und innen mit Druck beaufschlagt wird, um ein Aufblasverhältnis von 1:2 bis 1:5 zu erzielen und nach dem Aufblasen der Schlauch innenseitig mittels des Kühl- und Kalibrierdornes kalibriert und kontaktgekühlt wird.

16. Verfahren nach einem der Ansprüche 1 bis 14, **dadurch gekennzeichnet, daß** der aus der Düse austretende Schlauch unmittelbar anschließend innen und/oder außenseitig über einen Kühlluft blasenden Kühlring zur Kontaktkühlung geführt ist.

17. Verfahren nach einem der Ansprüche 1 bis 16, **dadurch gekennzeichnet, daß** der rohrförmige Schlauch beim Abziehen von der Düse in Längserstreckung bis um den Faktor 3 gereckt wird.

18. Verfahren nach einem der Ansprüche 1 bis 17, **dadurch gekennzeichnet, daß** die begaste schäumfähige Polymerschmelze innerhalb der ringförmigen Düse vor Austritt aus der Düse mindestens mit einem kompakten oder schäumfähigen Material beschichtet wird.

19. Verfahren nach einem der Ansprüche 1 bis 18, **dadurch gekennzeichnet, daß** nach dem Aufschneiden des Schlauches die flachgelegte Schaumfolie mit einer ein- oder mehrschichtigen kompakten oder geschäumten Folie ein- oder beidseitig laminiert wird.

20. Verfahren nach einem der Ansprüche 1 bis 19, **dadurch gekennzeichnet, daß** aus 100 Gew.-Teilen Polystyrol
3 - 4 Gew.-Teilen Treibmittel ausgewählt aus der Gruppe n-Butan, n-Pentan, Iso-Pentan oder Mischungen hiervon,
0,6 bis 1,5 Gew.-Teile Nukleierungsmittel aus Natriumbicarbonat und Zitronensäure mit einer Zersetzungstemperatur größer 160°C,
1 bis 3,5 Gew.-Teile eines in polaren Substanzen wie Polystyrol gut wirksamen Tensids und
1 bis 3 Gew.-Teile eines mit Polystyrol nicht mischbaren Fremdpolymers, wie eines Polyolefins oder Ethylen-Vinylacetat-Copolymers
eine teilweise offenzellige Schaumfolie hergestellt wird.

21. Verfahren nach einem der Ansprüche 1 bis 20, **dadurch gekennzeichnet, daß** das Nukleierungsmittel zusammen mit einem ein Polymer-Bindemittel auf Basis eines Acrylatpolymerisates im Verhältnis von 55:45 bis 65:35 Nukleierungsmittel zur Polymer-Bindemittel eingesetzt wird.

22. Verfahren nach einem der Ansprüche 1 bis 21, **dadurch gekennzeichnet, daß** bis zu 50 Gew.-% eines Regeneratstyrolpolymerisates anstelle von Frischmaterial eingesetzt wird.

23. Vorrichtung zum Herstellen einer zumindest teilweise offenzelligen Schaumfolie auf Basis von Styrolpolymerisaten, Nukleierungsmittel, Tensid, physikalischem Treibmittel und gegebenenfalls weiteren Additiven, wie Fremdpolymer und Hilfsstoffen umfassend einen Doppelschnekkenextruder mit einer Einzugs- und Plastifizierzone, Mischzone und Kühlzone, wobei die Styrolpolymerisate mit dem Nukleierungsmittel, Tensid, Additiven, gegebenenfalls zumindest teilweise als Vormischung, dem Doppelschneckenextruder zugeführt und zu einer Polymerschmelze aufgeschmolzen werden und in die Polymerschmelze unter erhöhtem Druck das physikalische Treibmittel injiziert wird, die begaste Polymerschmelze auf eine zum Aufschäumen geeignete, unterhalb der Aufschmelztemperatur des Styrolpolymerisates liegende Temperatur gekühlt wird und danach aus der Düse des Doppelschneckenextruders in Schlauchform unter Aufschäumen in die Atmosphäre austritt, und der Schlauch abgekühlt wird und in Längsrichtung aufgeschnitten und zu einer Schlauchfolie flachgelegt wird, **dadurch gekennzeichnet, daß** als Extruder zum Aufschmelzen des Polymers, Mischen der Polymerschmelze mit dem physikalischen Treibmittel und Kühlen der so erhaltenen schäumfähigen Polymerschmelze ein Doppelschneckenextruder einer Länge von mindestens 25 D, insbesondere 30 bis 42 D mit gleichen und gleichsinnig rotierenden parallelen Schnecken vorgesehen ist und das physikalische Treibmittel von der Fördereinrichtung mit einem ausreichenden Druck, am Ende der etwa 10 bis 15 D langen Einzugs- und Plastifizierzone des Doppelschneckenextruders in das aufgeschmolzene Polymer einleitbar ist und in der sich an die Einzugs- und Plastifizierzone anschließenden Mischzone mit einer 3 bis 6 D entsprechenden Länge des Doppelschneckenextruders mit dem aufgeschmolzenen Polymer zu einer schäumfähigen Polymerschmelze vermischbar ist.

24. Vorrichtung nach Anspruch 23, **dadurch gekennzeichnet, daß** eine ringförmige Düse mit einem daran außen- und/oder innenseitig angeordneten Kühlring zwecks Kontaktkühlung des aus der ringförmigen Düse austretenden Schlauchs vorgesehen ist.

25. Vorrichtung nach einem der Ansprüche 23 oder 24, **dadurch gekennzeichnet, daß** als ringförmige Düse eine Koextrusionsdüse zum Beschichten der begasten, schäumfähigen Polymerschmelze innerhalb der Düse mit mindestens einem kompakten oder schäumfähigen thermoplastischen Kunststoff vorgesehen ist, wobei für die Zuführung jedes thermoplastischen Kunststoffes in die Koextrusionsdüse jeweils ein weiterer Extruder vorgesehen ist.

## Claims

1. A process for production of a foam sheet having at least a proportion of open cells and based on styrene polymer, **characterized in that** a mixture comprising, based on 100 parts by weight of styrene polymer,
from 0.5 to 3 parts by weight of at least one nucleating agent
from 0.5 to 3.5 parts by weight of at least one surfactant, and
from 1 to 3 parts by weight of a polystyrene-immiscible foreign polymer
is melted in a twin-screw extruder with co-rotating screws at a temperature of up to 270°C and
from 2 to 6% by weight of at least one physical blowing agent, based on the amount of the styrene polymer used, are injected into the polymer melt, using an injection pressure which is above the barrel pressure of the twin-screw extruder at the injection point and is higher than the pressure needed to dissolve the blowing agent in the polymer, or is sufficiently high to permit formation of a homogeneously distributed two-phase melt/blowing agent system, preferably under a pressure of from 30 to 160 bar, and the polymer melt is passed, with homogeneous mixing to a melt temperature of from 160 to 180°C prior to discharge from the twin-screw extruder, into the die unit with an annular die, and is extruded under a pressure of up to 55 bar in the form of a tube from the die into the atmosphere, the tube is internally and externally cooled, with foaming, and is drawn over a cooling and calibrating mandrel and, after solidification, is slit and laid flat to give the foam sheet.

2. A process according to claim 1, **characterized in that** a foam sheet with a proportion of at least 25% of open cells is obtained.

3. A process according to claim 1 or 2, **characterized in that** a foam sheet with a density of from 40 to 100 kg/m³ or more is obtained.

4. A process according to any one of claims 1 to 3, **characterized in that** foam sheets of thickness from 0.3 to 10 mm, preferably from 1 to 5 mm, are obtained.

5. A process according to any one of claims 1 to 4, **characterized in that** organic blowing agents from the group of the aliphatic hydrocarbons having from 1 to 9 carbon atoms, e.g. methane, ethane, propane, n-butane, isobutane, n-pentane, isopentane and/or neopentane, and/or inorganic blowing agents, e.g. carbon dioxide or nitrogen, are used as physical blowing agents.

6. A process according to any one of claims 1 to 5, **characterized in that** calcium carbonate, calcium stearate, talc, titanium dioxide, silica, barium silicate, kieselguhr and/or mixtures of citric acid and sodium bicarbonate are used as nucleating agents.

7. A process according to any one of claims 1 to 6, **characterized in that** surfactants based on alkanesulphonates are used to increase the ability to absorb polar fluids.

8. A process according to any one of claims 1 to 7, **characterized in that** auxiliaries, e.g. inorganic fillers, pigments, antioxidants, UV absorbers, flame retardants, carbon black, antistatic agents, processing aids, lubricants and/or waxes, are added to the polymer mixture.

9. A process according to any one of claims 1 to 8, **characterized in that** a polyolefin or ethylene-vinyl acetate copolymer is used as foreign polymer.

10. A process according to any one of claims 1 to 9, **characterized in that** the foaming tube emerging from the die is cooled externally and/or internally by means of cooling air at a temperature at or below room temperature.

11. A process according to any one of claims 1 to 10, **characterized in that** the foaming tube emerging from the die is cooled internally by means of the cooling and calibrating mandrel controlled to a temperature of from 25 to 65°C.

12. A process according to any one of claims 1 to 11, **characterized in that** the melting of the styrene polymer, injection of the physical blowing agent into the polymer melt and cooling of the resultant gas-treated foamable polymer melt is carried out in a twin-screw extruder with a feed-and-plasticizing zone, a mixing zone and a cooling zone and with an annular discharge die of length at least 25 D, in particular from 30 to 42 D (D = screw diameter), with identical, co-rotating parallel screws, and the physical blowing agent is conducted into the polymer melt using a pressure below 160 bar, in particular from 30 to 160 bar, preferably from 30 to 70 bar, at the end of the feed-and-plasticizing zone of the twin-screw extruder, and in the mixing zone which follows the feed-and-plasticizing zone it is homogenized with the polymer melt to give a foamable polymer melt and is cooled to the discharge temperature.

13. A process according to any one of claims 1 to 12, **characterized in that** the amount of polymer fed to the twin-screw extruder is such as to give underfeed of the extruder.

14. A process according to any one of claims 1 to 13, **characterized in that** when two or more different blowing agents are used these are introduced into the polymer melt separately and in immediate succession.

15. A process according to any one of claims 1 to 14, **characterized in that** the tube emerging from the annular die is subjected internally and/or externally to cooling air and internally to pressure, in order to achieve an expansion ratio of from 1:2 to 1:5, and, after expansion, the tube is contact-cooled and calibrated internally by means of the cooling and calibrating mandrel.

16. A process according to any one of claims 1 to 14, **characterized in that** the tube emerging from the die is then immediately passed, for contact cooling, across on its inside or outside a cooling ring which supplies cooling air.

17. A process according to any one of claims 1 to 16, **characterized in that** the tube is stretched longitudinally by a factor of up to 3 on draw-off from the die.

18. A process according to any one of claims 1 to 17, **characterized in that** the gas-treated foamable polymer melt within the annular die is coated, prior to discharge from the die, at least with one compact or foamable material.

19. A process according to any one of claims 1 to 18, **characterized in that**, after slitting of the tube, the laid-flat foam sheet is laminated on one or both sides to a single- or multilayer compact or foamed sheet.

20. A process according to any one of claims 1 to 19, **characterized in that** a foam sheet having a proportion of open cells is produced from 100 parts by weight of polystyrene,
from 3 to 4 parts by weight of a blowing agent selected from the group of n-butane, n-pentane, isopentane or mixtures thereof,
from 0.6 to 1.5 parts by weight of a nucleating agent from sodium bicarbonate and citric acid with a decomposition temperature above 160°C;
from 1 to 3.5 parts by weight of a surfactant which has good action in polar substances, e.g. polystyrene, and
from 1 to 3 parts by weight of a polystyrene-immiscible foreign polymer, e.g. a polyolefin or ethylene-vinyl acetate copolymer.

21. A process according to any one of claims 1 to 20, **characterized in that** the nucleating agent is used together with a polymer binder based on an acrylate polymer, the nucleating agent:polymer binder ratio being from 55:45 to 65:35.

22. A process according to any one of claims 1 to 21, **characterized in that** up to 50% by weight of a reused styrene polymer is used instead of virgin material.

23. Apparatus for production of a foam sheet having at least a proportion of open cells and based on styrene polymer, nucleating agent, surfactant, physical blowing agent and, if desired, on other additives, e.g. foreign polymer and auxiliaries, comprising a twin-screw extruder with a feed-and-plasticizing zone, a mixing zone and a cooling zone, the styrene polymer being introduced into the twin-screw extruder with the nucleating agent, surfactant and additives, if desired at least to some extent in the form of a premix, and being melted to give a polymer melt, and the physical blowing agent being injected into the polymer melt at an elevated pressure, the gas-treated polymer melt being cooled to a temperature which is suitable for foaming and is below the melting point of the styrene polymer and being then discharged from the die of the twin-screw extruder in tube form into the atmosphere, with foaming, and the tube being cooled and longitudinally slit and laid flat to give a blown film, **characterized in that** a twin-screw extruder of length at least 25 D, in particular from 30 to 42 D, with identical, co-rotating parallel screws is provided as extruder for melting of the polymer, mixing of the polymer melt with the physical blowing agent and cooling of the resultant foamable polymer melt, and the physical blowing agent can be conducted into the molten polymer from the conveying equipment with sufficient pressure, at the end of the feed-and-plasticizing zone, of length from about 10 to 15 D, in the twin-screw extruder, and can be mixed, in the mixing zone which follows the feed-and-plasticizing zone and has a length corresponding to from 3 to 6 D in the twin-screw extruder, with the molten polymer to give a foamable polymer melt.

24. Apparatus according to claim 23, **characterized in that**, for contact-cooling of the tube emerging from the annular die, an annular die is provided which has a cooling ring externally and/or internally arranged thereon.

25. Apparatus according to either of claims 23 and 24, **characterized in that** a co-extrusion die is provided as annular die for coating of the gas-treated, foamable polymer melt within the die with at least one compact or foamable thermoplastic material, a further extruder being provided in each case for introduction of each thermoplastic into the co-extrusion die.

## Revendications

1. Procédé de fabrication d'une feuille de mousse à cellules au moins en partie ouvertes, à base de polymère de styrène, **caractérisé en ce que** l'on fait fondre un mélange qui contient, pour 100 parties en poids de polymère de styrène :
- de 0,5 à 3 parties en poids d'au moins un agent de nucléation,
- de 0,5 à 3,5 parties en poids d'au moins un tensio-actif,
- et de 1 à 3 parties en poids d'un autre polymère, non miscible avec un polystyrène,
dans une extrudeuse bivis à vis corotatives, à une température qui peut valoir jusqu'à 270 °C, et l'on injecte dans la masse de polymère fondu
- de 2 à 6 % en poids, par rapport à la quantité de polymère de styrène employée, d'au moins un agent d'expansion physique,
sous une pression d'injection qui est supérieure à la pression régnant dans le fourreau de l'extrudeuse bivis au point d'injection, et qui est plus élevée que celle à laquelle l'agent d'expansion se dissout dans le polymère ou suffisamment élevée pour permettre l'établissement d'un système à deux phases, masse fondue et agent d'expansion, réparties de manière homogène, de préférence sous une pression de 30 à 160 bars, puis on porte la masse de polymère fondu, tout en la malaxant pour obtenir un mélange homogène, à une température de 160 à 180 °C avant qu'elle sorte de l'extrudeuse bivis et passe dans l'outil à filière doté d'une filière annulaire, et l'on extrude en un tube cette masse de polymère fondu, sous une pression pouvant valoir jusqu'à 55 bars, en la faisant sortir de la filière et passer dans l'atmosphère environnante, on refroidit le tube en cours d'expansion, du côté interne et du côté externe, on le tire en le faisant passer sur un mandrin de refroidissement et de calibrage, et une fois qu'il est assez solide, on le coupe et on l'étale à plat pour en faire une feuille de mousse.

2. Procédé conforme à la revendication 1, **caractérisé en ce que** l'on obtient une feuille de mousse où la proportion de cellules ouvertes vaut au moins 25 %.

3. Procédé conforme à la revendication 1 ou 2, **caractérisé en ce que** l'on obtient une feuille de mousse dont la masse volumique vaut de 40 à 100 kg/m³ ou plus.

4. Procédé conforme à l'une des revendications 1 à 3, **caractérisé en ce que** l'on obtient une feuille de mousse épaisse de 0,3 à 10 mm, et de préférence, de 1 à 5 mm.

5. Procédé conforme à l'une des revendications 1 à 4, **caractérisé en ce que** l'on utilise comme agent d'expansion physique un agent d'expansion organique choisi dans l'ensemble des hydrocarbures aliphatiques en C₁₋₉, tels les méthane, éthane, propane, n-butane, isobutane, n-pentane, isopentane et/ou néopentane, et/ou un agent d'expansion inorganique comme du dioxyde de carbone ou de l'azote.

6. Procédé conforme à l'une des revendications 1 à 5, **caractérisé en ce que** l'on emploie comme agent de nucléation du carbonate de calcium, du stéarate de calcium, du talc, du dioxyde de titane, de la silice, du stéarate de baryum, de la terre d'infusoires, et/ou un mélange d'acide citrique et de bicarbonate de sodium.

7. Procédé conforme à l'une des revendications 1 à 6, **caractérisé en ce que**, pour augmenter la capacité d'absorption de liquides polaires, on emploie un tensioactif à base d'alcanesulfonate.

8. Procédé conforme à l'une des revendications 1 à 7, **caractérisé en ce que** l'on ajoute au mélange à base de polymère des adjuvants comme des charges inorganiques, des pigments, des anti-oxydants, des absorbeurs d'UV, des ignifugeants, du noir de fumée, des antistatiques, des auxiliaires de traitement, des lubrifiants et/ou des cires.

9. Procédé conforme à l'une des revendications 1 à 8, **caractérisé en ce que** l'on emploie comme autre polymère une polyoléfine ou un copolymère d'éthylène et d'acétate de vinyle.

10. Procédé conforme à l'une des revendications 1 à 9, **caractérisé en ce que** l'on refroidit avec de l'air froid le tube en cours d'expansion qui sort de la filière, du côté interne et/ou du côté externe, jusqu'à une tempé-rature égale ou inférieure à la température ambiante.

11. Procédé conforme à l'une des revendications 1 à 10, **caractérisé en ce que** l'on refroidit le tube en cours d'expansion qui sort de la filière, du côté interne, au moyen du mandrin de refroidissement et de calibrage dont la température est réglée à une valeur de 25 à 65 °C.

12. Procédé conforme à l'une des revendications 1 à 11, **caractérisé en ce que** la fusion du polymère de styrène, l'injection de l'agent d'expansion physique dans la masse de polymère fondu et le refroidissement de la masse de polymère fondu additionné de gaz et expansible ainsi obtenue sont effectués dans une extrudeuse bivis comportant une zone d'alimentation et de plastification, une zone de mélange et une zone de refroidissement, équipée d'une filière de sortie annulaire et d'une paire de vis identiques, parallèles et tournant dans le même sens, et longue d'au moins 25 D et en particulier de 30 à 42 D (où D représente le diamètre des vis), et **en ce que** l'agent d'expansion physique est injecté dans la masse de polymère fondu à la fin de la zone d'alimentation et de plastification de l'extrudeuse bivis, sous une pression inférieure à 160 bars, en particulier de 30 à 160 bars et de préférence de 30 à 70 bars, et incorporé de manière homogène, dans la zone de mélange qui fait suite à la zone d'alimentation et de plastification, dans la masse de polymère fondu qui devient alors expansible, avant d'être refroidie à la température de sortie.

13. Procédé conforme à l'une des revendications 1 à 12, **caractérisé en ce que** l'on alimente l'extrudeuse bivis avec une quantité de polymère telle qu'elle fonctionne en alimentation réduite.

14. Procédé conforme à l'une des revendications 1 à 13, **caractérisé en ce que**, dans le cas où l'on emploie deux agents d'expasion différents ou plus, on les injecte séparément, l'un immédiatement après l'autre, dans la masse de polymère fondu.

15. Procédé conforme à l'une des revendications 1 à 14, **caractérisé en ce que** le tube sortant de la filière annulaire est refroidi avec de l'air froid envoyé sur ses parois externe et/ou interne et gonflé de l'intérieur par pression, jusqu'à présenter un rapport de gonflage de 1/2 à 1/5, et après ce gonflage, on met le tube au calibre et on le refroidit de l'intérieur par contact, au moyen du mandrin de refroidissement et de calibrage.

16. Procédé conforme à l'une des revendications 1 à 14, **caractérisé en ce que**, immédiatement après que le tube est sorti de la filière annulaire, on le fait passer, pour le refroidir par contact, à travers un anneau refroidisseur au moyen duquel de l'air froid est envoyé sur ses parois externe et/ou interne.

17. Procédé conforme à l'une des revendications 1 à 16, **caractérisé en ce que** le tube subit, lorsqu'il sort de la filière, un étirage en longueur de facteur pouvant valoir jusqu'à 3.

18. Procédé conforme à l'une des revendications 1 à 17, **caractérisé en ce que**, avant de sortir de la filière, la masse de polymère fondu additionné de gaz et expansible est revêtue, à l'intérieur de la filière annulaire, d'une couche d'au moins un matériau compact ou expansible.

19. Procédé conforme à l'une des revendications 1 à 18, **caractérisé en ce que**, après avoir coupé le tube, on lie à la feuille de mousse étalée à plat, sur un côté ou sur les deux, une feuille de matière expansée ou compacte, monocouche ou multicouche, pour en faire un stratifié.

20. Procédé conforme à l'une des revendications 1 à 19, **caractérisé en ce que** l'on prépare une feuille de mousse à cellules en partie ouvertes en utilisant, pour 100 parties en poids de polystyrène,
- 3 à 4 parties en poids d'un agent d'expansion choisi parmi du n-butane, du n-pentane, de l'isopentane et leurs mélanges,
- 0,6 à 1,5 partie en poids d'un agent de nucléation, constitué de bicarbonate de sodium et d'acide citrique, dont la température de décomposition est supérieure à 160 °C,
- 1 à 3,5 parties en poids d'un tensioactif à effet satisfaisant dans des substances polaires comme le polystyrène,
- et 1 à 3 parties en poids d'un autre polymère, non miscible avec le polystyrène, comme une polyoléfine ou un copolymère d'éthylène et d'acétate de vinyle.

21. Procédé conforme à l'une des revendications 1 à 20, **caractérisé en ce que** l'agent de nucléation est ajouté conjointement avec un liant polymère à base d'un polymère d'acrylate, en un rapport de l'agent de nucléation au liant polymère de 55/45 à 65/35.

22. Procédé conforme à l'une des revendications 1 à 21, **caractérisé en ce que** l'on emploie jusqu'à 50 % d'un polymère de styrène de recyclage, au lieu de matériau neuf.

23. Appareillage de fabrication de feuilles de mousse à cellules au moins en partie ouvertes, à base de polymère de styrène, d'un agent de nucléation, d'un tensioactif, d'un agent d'expansion physique et d'éventuels autres adjuvants, comme un autre polymère et des auxiliaires, lequel appareillage comporte une extrudeuse bivis comportant une zone d'alimentation et de plastification, une zone de mélange et une zone de refroidissement, le polymère de styrène étant introduit dans l'extrudeuse bivis avec l'agent de nucléation, le tensioactif et les autres adjuvants, le cas échéant sous forme, au moins en partie, de mélange préparé au préalable, et transformé en une masse de polymère fondu dans laquelle l'agent d'expansion physique est injecté sous haute pression, la masse de polymère fondu additionné de gaz étant refroidie à une température appropriée pour l'expansion, inférieure à la température de fusion du polymère de styrène, et sortant ensuite de l'extrudeuse bivis par la filière, sous forme de tube, tout en s'expansant dans l'atmosphère environnante, ce tube étant ensuite refroidi, coupé dans le sens de la longueur et étalé à plat pour constituer une feuille de mousse, lequel appareillage est **caractérisé en ce que** l'extrudeuse employée pour faire fondre le polymère, mélanger la masse de polymère fondu avec l'agent d'expansion physique et refroidir la masse de polymère fondu expansible ainsi obtenue est une extrudeuse bivis, longue d'au moins 25 D, en particulier de 30 à 42 D, et munie de deux vis identiques, parallèles et tournant dans le même sens, et **en ce que** l'agent d'expansion physique peut y être injecté sous une pression suffisante dans la masse de polymère fondu, par le dispositif d'alimentation, à la fin de la zone d'alimentation et de plastification, longue d'à peu près 10 à 15 D, de l'extrudeuse bivis, puis incorporé dans la masse de polymère fondu, dans la zone de mélange de l'extrudeuse bivis, zone longue de 3 à 6 D qui fait suite à la zone d'alimentation et de plastification, ce qui donne une masse de polymère fondu expansible.

24. Appareillage conforme à la revendication 23, **caractérisé en ce qu'**il comporte une filière annulaire équipée d'un anneau ou d'anneaux de refroidissement, disposé(s) sur sa face interne et/ou sur sa face externe, qui ont pour rôle de refroidir par contact le tube sortant de la filière annulaire.

25. Appareillage conforme à la revendication 23 ou 24, **caractérisé en ce que** la filière annulaire est une filière de coextrusion qui permet de revêtir la masse de polymère fondu additionné de gaz et expansible, à l'intérieur de la filière, d'une couche d'au moins une matière thermoplastique compacte ou expansible, et **en ce qu'**il comporte au moins une autre extrudeuse, soit une par matière thermoplastique à amener à la filière de coextrusion.
